# EUROPEAN PATENT APPLICATION

(11) **EP 4 760 464 A1**
(43) Date of publication of application: **17.06.2026**
(21) Application number: 25209250.7
(22) Date of filing: 16.10.2025
(51) Int. Cl.: G06F 3/0354, G06F 1/16, G06F 3/044, G06F 3/046

(54) **ELECTRONIC APPARATUS AND CONTROL METHOD FOR ELECTRONIC APPARATUS**

(30) Priority: 16.12.2024 JP 2024219618
(71) Applicant: Lenovo Japan LLC, Tokyo 101-0021 (JP)
(72) Inventor: YOSHITOMI, Keiichi, Nishi-ku, 3-6-1-21F (JP); TOKYO, Asahi, Nishi-ku, 3-6-1-21F (JP)
(74) Representative: Openshaw & Co.

(57) **Abstract**

The present invention is to provide an electronic apparatus and a control method for the electronic apparatus capable of preventing an input device from being lost. The electronic apparatus includes a first chassis and a second chassis. The first chassis includes a display and a touch sensor, and the second chassis includes a controller. When the state of the first chassis relative to the second chassis is an open state, the controller detects a position where an input device touches or approaches the display based on output signals of multiple detection elements of the touch sensor. When the state of the first chassis is a closed state, the controller determines whether or not the input device is housed on the first chassis or the second chassis based on the output signals of the multiple detection elements. When determining that the input device is not housed on the first chassis or the second chassis, the controller outputs a warning.

## Description

### BACKGROUND OF THE INVENTION

### Field of the Invention

The present invention relates to an electronic apparatus and a control method for the electronic apparatus.

### Description of the Related Art

In recent years, an information processing system including an input device also called an electronic pen, a smart pen, or a stylus pen, and an electronic apparatus such as a tablet terminal on which handwritten input with the input device is possible has been known (for example, see PCT Japanese Translation Patent Publication No. 2017-537395).

### SUMMARY OF THE INVENTION

When the input device is detachable from the electronic apparatus, a user is likely to lose the input device unintentionally. Therefore, it is desirable to be able to monitor the state of the input device relative to the electronic apparatus. The following techniques for detecting the state of the input device relative to the electronic apparatus have been developed.

For example, a technique using an input device equipped with a BLE (Bluetooth (registered trademark) Low Energy) function to monitor the RSSI (Received Signal Strength Indicator) of a signal transmitted from the input device has been developed. However, in this technique, it is necessary for the input device to have the BLE function. In this technique, an approximate distance between the input device and the electronic apparatus can be estimated based on the RSSI, but it is not possible to distinguish between a state where the input device is attached to the electronic apparatus and a state where the input device is detached from the electronic apparatus and placed in the neighborhood of the electronic apparatus. Although another technique for detecting the state of the input device equipped with the BLE function has also been developed, it is necessary for the input device to have the BLE function in the same way.

On the other hand, a technique using an attachment mechanism called a pogo pin to detect a change in the state of the pogo pin has been developed. However, in this technique, it is necessary to provide pogo pin parts in the input device and the electronic apparatus.

It is an object of the present invention to provide an electronic apparatus and a control method for the electronic apparatus capable of preventing an input device from being lost.

The first aspect of the present invention is an electronic apparatus including a first chassis and a second chassis, wherein the first chassis includes a display, and a touch sensor having multiple detection elements to detect touch or approach of an input device on or to the display, and the second chassis includes a controller which detects a position where the input device touches or approaches the display based on output signals of the multiple detection elements when the state of the first chassis relative to the second chassis is an open state, or which determines whether or not the input device is housed on the first chassis or the second chassis based on the output signals of the multiple detection elements when the state of the first chassis relative to the second chassis is a closed state, and outputs a warning when determining that the input device is not housed on the first chassis or the second chassis.

The above aspect of the present invention may be such that the multiple detection elements are arranged in a first area corresponding to a position where the input device is housed on the first chassis or the second chassis, and a second area other than the first area, and when the state of the first chassis relative to the second chassis is the open state, the controller detects the position where the input device touches or approaches the display based on output signals of the multiple detection elements arranged in the first area and the second area, or when the state of the first chassis relative to the second chassis is the closed state, the controller determines whether or not the input device is housed on the first chassis or the second chassis based on output signals of detection elements arranged in the first area among the multiple detection elements.

The above aspect of the present invention may also be such that, when the state of the first chassis relative to the second chassis is the open state, the controller acquires output signals of the multiple detection elements at a first rate, or when the state of the first chassis relative to the second chassis is the closed state, the controller acquires the output signals of the multiple detection elements at a second rate lower than the first rate.

The above aspect of the present invention may further be such that, when the state of the first chassis relative to the second chassis is the open state, the controller sets the gain of the multiple detection elements to a first value, or when the state of the first chassis relative to the second chassis is the closed state, the controller sets the gain to a second value higher than the first value.

Further, the above aspect of the present invention may be such that, when the state of the first chassis relative to the second chassis is the open state, the controller sets, to a first value, a detection threshold value, with which a value of each of the output signals of the multiple detection elements is compared, to determine that the input device is touching or approaching the display, or when the state of the first chassis relative to the second chassis is the closed state, the controller sets the detection threshold value to a second value smaller than the first value.

Further, the above aspect of the present invention may be such that the multiple detection elements contain multiple first detection elements for detecting a position where the input device touches the display, and multiple second detection elements for detecting a position where the input device approaches the display, and when the state of the first chassis relative to the second chassis is the open state, the controller acquires output signals of the multiple first detection elements and output signals of the multiple second detection elements, or when the state of the first chassis relative to the second chassis is the closed state, the controller acquires output signals of the multiple second detection elements.

The second aspect of the present invention is a control method for an electronic apparatus including a first chassis and a second chassis, wherein when the state of the first chassis relative to the second chassis is an open state, a position where an input device touches or approaches a display placed on the first chassis is detected based on output signals of multiple detection elements equipped in a touch sensor placed on the first chassis, or when the state of the first chassis relative to the second chassis is a closed state, it is determined whether or not the input device is housed on the first chassis or the second chassis based on the output signals of the multiple detection elements, and when it is determined that the input device is not housed on the first chassis or the second chassis, a warning is output.

The above aspects of the present invention can prevent the input device from being lost.

### BRIEF DESCRIPTION OF THE DRAWINGS

FIG. 1 is a diagram illustrating an electronic apparatus according to an embodiment of the present invention.
FIG. 2 is a diagram illustrating an input device according to the embodiment of the present invention.
FIG. 3 is a diagram illustrating a state where the position of a chassis is an open position and the input device is magnetically attracted to a first attraction position.
FIG. 4 is a diagram illustrating an example of a main hardware configuration of the electronic apparatus according to the embodiment of the present invention.
FIG. 5 is a block diagram illustrating an example of the functional configuration of the electronic apparatus according to the embodiment of the present invention.
FIG. 6 is a block diagram illustrating an example of the configuration of a touch sensor unit in the electronic apparatus according to the embodiment of the present invention.
FIG. 7 is a flowchart illustrating an example of the operation of the electronic apparatus according to the embodiment of the present invention.

### DETAILED DESCRIPTION OF THE INVENTION

An embodiment of the present invention will be described below with reference to the accompanying drawings.

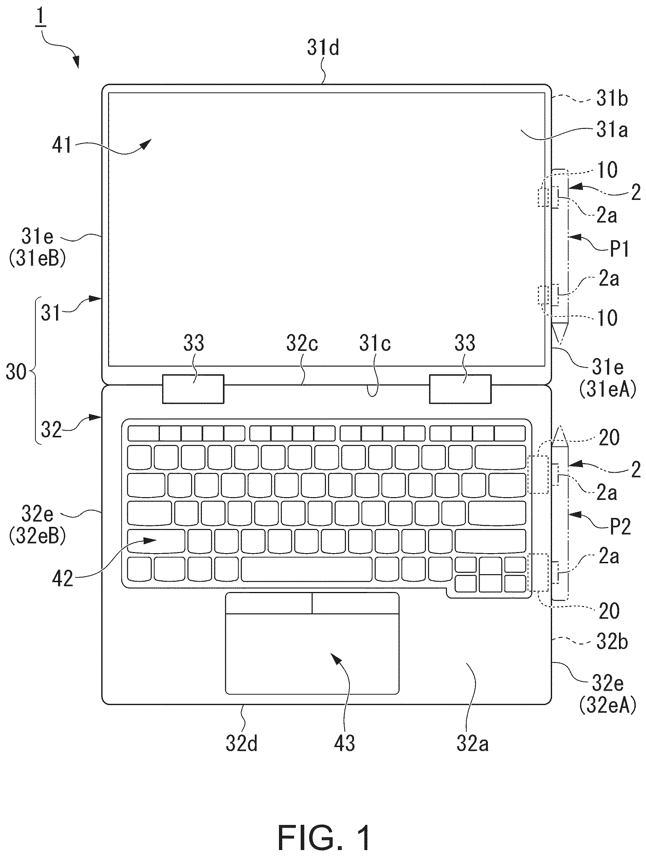

As illustrated in FIG. 1, an electronic apparatus 1 according to the present embodiment includes first magnetic attraction parts 10, second magnetic attraction parts 20, and a chassis 30. The chassis 30 has a first chassis 31 and a second chassis 32. In the present embodiment, the first chassis 31 and the second chassis 32 are coupled by a hinge mechanism 33.

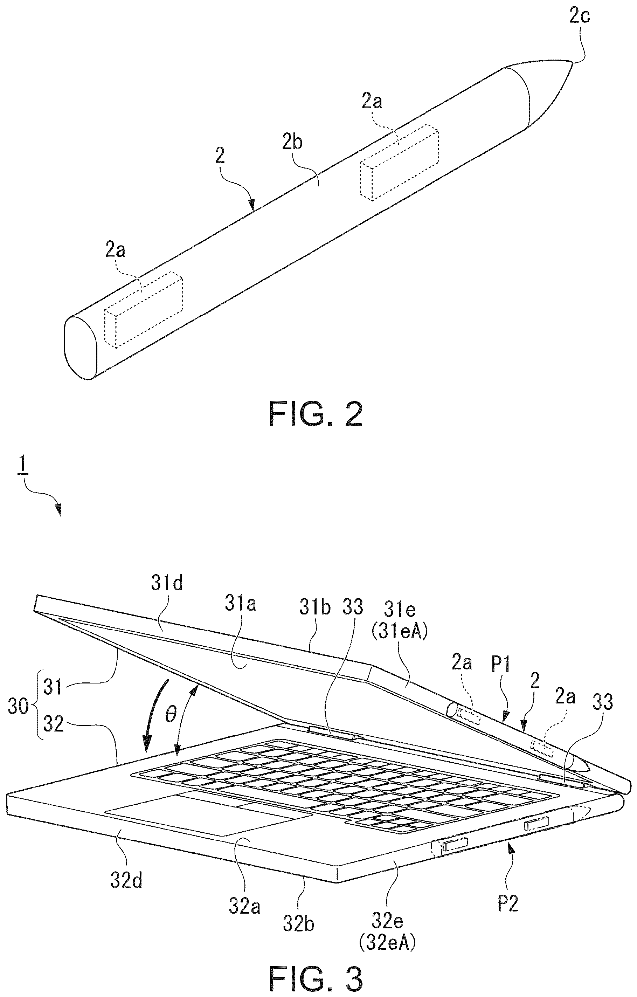

The first chassis 31 has a flat box shape. The first chassis 31 has a first opposite surface 31a, a first back surface 31b, a first coupling edge 31c, a first free edge 31d, and two first side edges 31e (a first right-side edge 31eA and a first left-side edge 31eB). The first back surface 31b is located on the other side of the first opposite surface 31a (also see FIG. 3). The first coupling edge 31c, the first right-side edge 31eA, the first free edge 31d, and the first left-side edge 31eB are connected in this order along the outer edge of the first opposite surface 31a. The hinge mechanism 33 is coupled on the first coupling edge 31c. The first free edge 31d is located on the other side of the first coupling edge 31c. The two first side edges 31e connect both ends of the first free edge 31d and both ends of the first coupling edge 31c.

The first chassis 31 according to the present embodiment is a display chassis having a display 41 and the like. In the illustrated example, the display 41 is located on the first opposite surface 31a of the first chassis 31. The first chassis 31 may be composed of one member, or may be made up by combining two or more members.

The second chassis 32 has a flat box shape. The second chassis 32 has a second opposite surface 32a, a second back surface 32b, a second coupling edge 32c, a second free edge 32d, and two second side edges 32e (a second right-side edge 32eA and a second left-side edge 32eB). The second back surface 32b is located on the other side of the second opposite surface 32a (also see FIG. 3). The second coupling edge 32c, the second right-side edge 32eA, the second free edge 32d, and the second left-side edge 32eB are connected in this order along the outer edge of the second opposite surface 32a. The hinge mechanism 33 is coupled on the second coupling edge 32c. The second free edge 32d is located on the other side of the second coupling edge 32c. The two second side edges 32e connect both ends of the second free edge 32d and both ends of the second coupling edge 32c.

The second chassis 32 according to the present embodiment is a base chassis having a keyboard 42, a touch pad 43, a motherboard (not illustrated), and the like. In the illustrated example, the keyboard 42 and the touch pad 43 are located on the second opposite surface 32a of the second chassis 32. The second chassis 32 may be composed of one member, or may be made up by combining two or more members.

The hinge mechanism 33 couples the first chassis 31 and the second chassis 32 in a manner capable of being opened and closed. In other words, the hinge mechanism 33 couples the first chassis 31 and the second chassis 32 in a manner capable of switching the position of the chassis 30 between an open position and a closed position.

Specifically, the hinge mechanism 33 couples the first chassis 31 and the second chassis 32 in such a state that an angle θ formed by the first opposite surface 31a and the second opposite surface 32a is changeable (see FIG. 3). Note that the "closed position" is such a position that the first opposite surface 31a of the first chassis 31 and the second opposite surface 32a of the second chassis 32 face each other. In the closed position, the first opposite surface 31a and the second opposite surface 32a are parallel to each other, and the angle θ=0°. At this time, the state of the first chassis 31 relative to the second chassis 32 is a closed state. The "open position" is such a position that the first opposite surface 31a of the first chassis 31 and the second opposite surface 32a of the second chassis 32 do not face each other. In the open position, the first opposite surface 31a and the second opposite surface 32a are not parallel, and the angle is 0°<θ(<360°). Note that the first back surface 31b and the second back surface 32b do not face each other and are not parallel in the open position. At this time, the state of the first chassis 31 relative to the second chassis 32 is an open state.

Further, the hinge mechanism 33 may couple the first chassis 31 and the second chassis 32 in such a manner that a fully open position can also be taken in addition to the open position and the closed position. The "fully open position" is such a position that the first back surface 31b of the first chassis 31 and the second back surface 32b of the second chassis 32 face each other. In other words, the first back surface 31b and the second back surface 32b are parallel to each other and the angle θ=360° in the fully open position. Note that the chassis 30 does not have to take the fully open position. In other words, the maximum value of θ may be less than 360°.

The electronic apparatus 1 according to the present embodiment is a clamshell type or a 2in1 type of laptop PC, but any other type of electronic apparatus 1 may also be adopted. For example, the electronic apparatus 1 may be a foldable smartphone or gaming device.

The first magnetic attraction parts 10 are provided in the first chassis 31. For example, the first magnetic attraction parts 10 may be permanent magnets. The first magnetic attraction parts 10 may be housed in the first chassis 31. The first magnetic attraction parts 10 in the illustrated example are located inside the first right-side edge 31eA of the first chassis 31. In the illustrated example, two first magnetic attraction parts 10 are spaced out along the first right-side edge 31eA.

The second magnetic attraction parts 20 are provided in the second chassis 32. For example, the second magnetic attraction parts 20 may be permanent magnets. The second magnetic attraction parts 20 may be housed in the second chassis 32. The second magnetic attraction parts 20 in the illustrated example are located inside the second right-side edge 32eA of the second chassis 32. In the illustrated example, two second magnetic attraction parts 20 are spaced out along the second right-side edge 32eA. The space between the second magnetic attraction parts 20 is approximately equal to the space between the first magnetic attraction parts 10. Note that the phrase "approximately equal" includes a case where it can be considered to be equal except for manufacturing tolerances. The same applies to the following description.

The electronic apparatus 1 according to the present embodiment is so configured that the input device 2 is attachable to either one of a first attraction position P1 and a second attraction position P2 by a magnetic attraction force generated from the first magnetic attraction parts 10 or the second magnetic attraction parts 20 described above. Specifically, the first magnetic attraction parts 10 magnetically attract the input device 2 to the first attraction position P1. The second magnetic attraction parts 20 magnetically attract the input device 2 to the second attraction position P2. The first attraction position P1 is located on the side of the first chassis 31 (on the first right-side edge 31eA in the illustrated example). The second attraction position P2 is located on the side of the second chassis 32 (on the second right-side edge 32eA in the illustrated example). The input device 2 may also be attachable only to one of the first attraction position P1 and the second attraction position P2.

The input device 2 is a device for inputting information to the electronic apparatus 1. For example, the input device 2 may be a stylus pen.

As illustrated in FIG. 2, the input device 2 has a pen chassis 2b. The pen chassis 2b houses various parts (not illustrated) of the input device 2. The pen chassis 2b is also a part of the input device 2 that the user holds. A pen tip 2c is provided at the tip of the pen chassis 2b. For example, the pen tip 2c enters information according to user operations on the display 41 of the electronic apparatus 1 due to static electricity or the like on the display 41.

The input device 2 according to the present embodiment has pen-side magnetic attraction parts 2a. For example, the pen-side magnetic attraction parts 2a are housed in the pen chassis 2b. For example, the pen-side magnetic attraction parts 2a may be permanent magnets. In the illustrated example, two pen-side magnetic attraction parts 2a of the input device 2 are spaced out along a longitudinal direction of the input device 2. The space between the pen-side magnetic attraction parts 2a is approximately equal to the space between the first magnetic attraction parts 10 and the space between the second magnetic attraction parts 20. The input device 2 is magnetically attracted to the first attraction position P1 of the first chassis 31 due to a magnetic force acting between the pen-side magnetic attraction parts 2a and the first magnetic attraction parts 10. Similarly, the input device 2 is magnetically attracted to the second attraction position P2 of the second chassis 32 due to the magnetic force acting between the pen-side magnetic attraction parts 2a and the second magnetic attraction parts 20.

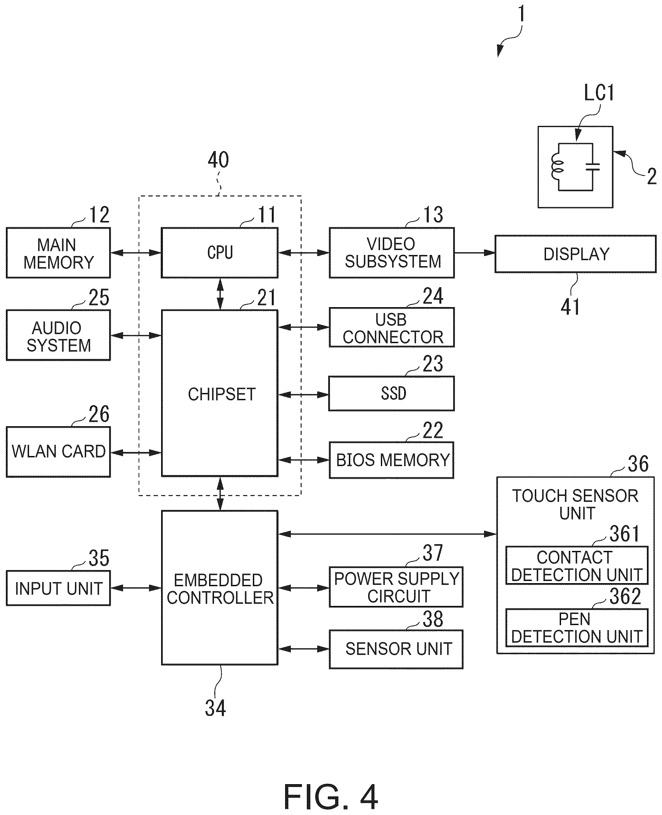

FIG. 4 is a diagram illustrating an example of a main hardware configuration of the electronic apparatus 1 according to the present embodiment. As illustrated in FIG. 4, the electronic apparatus 1 includes a CPU 11, a main memory 12, a video subsystem 13, the display 41, a chipset 21, a BIOS memory 22, an SSD 23, a USB connector 24, an audio system 25, a WLAN card 26, an embedded controller 34, an input unit 35, a touch sensor unit 36, a power supply circuit 37, and a sensor unit 38.

The CPU (Central Processing Unit) 11 executes various kinds of arithmetic processing by program control to control the entire electronic apparatus 1. The main memory 12 is a writable memory used as reading areas of execution programs of the CPU 11 or working areas to which processed data of the execution programs are written. The main memory 12 is composed, for example, of plural DRAM (Dynamic Random Access Memory) chips. The execution programs include an OS, various device drivers for hardware-operating peripheral devices, various services/utilities, application programs (application software), and the like.

The video subsystem 13 is a subsystem for implementing a function related to image display, which includes a video controller. This video controller processes drawing instructions from the CPU 11, writes processed drawing information into a video memory, and reads this drawing information from the video memory to output the drawing information to the display 41 as drawing data (display data).

The display 41 is, for example, a liquid crystal display or an organic EL (Electro-Luminescence) display to display images based on the drawing data (display data) output from the video subsystem 13.

The chipset 21 includes controllers such as for USB (Universal Serial Bus), serial ATA (AT Attachment), an SPI (Serial Peripheral Interface) bus, a PCI (Peripheral Component Interconnect) bus, a PCI-Express bus, and an LPC (Low Pin Count) bus, and plural devices are connected thereto. In FIG. 4, as examples of devices, the BIOS memory 22, the SSD 23, the USB connector 24, the audio system 25, the WLAN card 26, and the embedded controller 34 are connected to the chipset 21.

The BIOS (Basic Input Output System) memory 22 is configured, for example, by an electrically rewritable nonvolatile memory such as an EEPROM (Electrically Erasable Programmable Read Only Memory) or a flash ROM. The BIOS memory 22 stores a BIOS, system firmware for controlling the embedded controller 34 and the like.

The SSD (Solid State Drive) 23 (an example of a nonvolatile storage device) stores the OS, various drivers, various services/utilities, application programs (hereinafter, which may also be called applications), and various data. The USB connector 24 is a connector to connect peripheral devices using USB.

The audio system 25 records, plays back, and outputs sound data. The WLAN (Wireless Local Area Network) card 26 is connected to a network through wireless LAN to perform data communication. For example, when receiving data from the network, the WLAN card 26 generates an event trigger indicating that the data is received.

The embedded controller 34 is a one-chip microcomputer which monitors and controls various devices (peripheral devices, sensors, and the like) regardless of the system state of the electronic apparatus 1. Further, the embedded controller 34 has a power management function to control the power supply circuit 37. Note that the embedded controller 34 is composed of a CPU, a ROM, a RAM, and the like, which are not illustrated, and includes multi-channel A/D input terminal and D/A output terminal, a timer, and digital input/output terminals. To the embedded controller 34, for example, the input unit 35, the touch sensor unit 36, the power supply circuit 37, the sensor unit 38, and the like are connected through these input/output terminals. The embedded controller 34 controls the operation of these units.

The input unit 35 is, for example, an input unit including a power switch, a pointing device, an input device, and the like. For example, the touch sensor unit 36 detects the approach of the input device 2 (pen-shaped medium) to the screen of the display 41 within a predetermined distance (within a threshold distance), and when the input device 2 approaches the screen within the predetermined distance, the position of the input device 2 on the screen is detectable in a non-contact state. In other words, the touch sensor unit 36 can detect a state where the input device 2 approaches the screen of the display 41 within the threshold distance in the non-contact state, that is, a hovering state of the input device 2 maintained for a certain period of time.

Further, the touch sensor unit 36 includes a contact detection unit 361 and a pen detection unit 362. The contact detection unit 361 is, for example, a capacitive touch sensor to detect an operating medium (the input device 2 or an object such as a finger) in contact with the screen of the display 41, and the contact position of the operating medium.

The pen detection unit 362 is, for example, an electromagnetic induction touch sensor to detect a non-contact position of the input device 2 on the screen of the display 41 using a resonant circuit LC1 of the input device 2. For example, the pen detection unit 362 can detect that the input device 2 approaches the screen of the display 41 within the threshold distance. Thus, the touch sensor unit 36 can detect touch input due to the touch of an object (for example, the input device 2, a finger, or the like) on the screen of the display 41, and pen input due to the touch of the input device 2.

Note that, when the pen detection unit 362 detects that the input device 2 approaches the screen of the display 41 within the threshold distance, the touch sensor unit 36 can detect hovering of the input device 2 by the contact detection unit 361 detecting non-contact of the input device 2.

The input device 2 includes the resonant circuit LC1. The input device 2 is configured to be able to detect the position of the input device 2 on the screen of the display 41 using the resonant circuit in such a manner that power is supplied by electromagnetic induction in a coil of the resonant circuit LC1.

The power supply circuit 37 includes, for example, a DC/Dc converter, a charge/discharge unit, a battery unit, an AC/DC adapter, and the like to convert DC voltage supplied from the AC/DC adapter or the battery unit into plural voltages required to operate the electronic apparatus 1. Further, the power supply circuit 37 supplies power to each unit of the electronic apparatus 1 under the control of the embedded controller 34.

θ The sensor unit 38 is, for example, an acceleration sensor, a gyro sensor, or the like to detect a screen display orientation indicative of the usage state of the electronic apparatus 1. For example, the sensor unit 38 detects the direction of gravitational acceleration to detect the screen display orientation of the electronic apparatus 1 (display 41).

Note that the CPU 11 and the chipset 21 described above correspond to a controller 40 in the present embodiment. The controller 40 executes processing based on the OS (for example, Windows (registered trademark)).

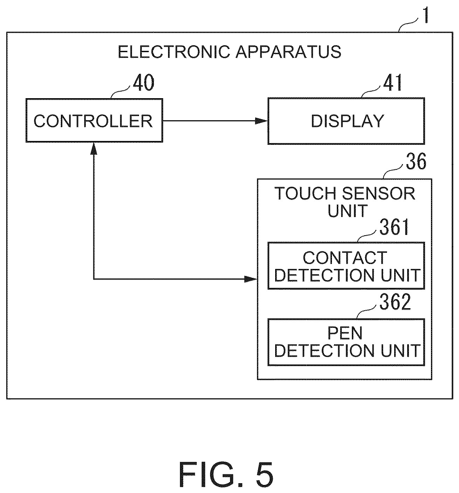

FIG. 5 is a block diagram illustrating an example of the functional configuration of the electronic apparatus 1 according to the present embodiment. As illustrated in FIG. 5, the electronic apparatus 1 includes the controller 40, the touch sensor unit 36, and the display 41. Note that only a main functional configuration related to the invention of the present embodiment is illustrated in FIG. 5 as the configuration of the electronic apparatus 1.

The controller 40 is a functional unit implemented by the CPU 11 and the chipset 21 executing programs stored in the main memory 12 to execute various processing based on the OS. Since the touch sensor unit 36 and the display 41 are already described, the description thereof will be omitted.

The controller 40 displays various kinds of information on the display 41. Further, the controller 40 sets an operating mode of the electronic apparatus 1 according to the state of the first chassis 31 relative to the second chassis 32. The operating mode of the electronic apparatus 1 is set to a normal mode or a pen detection mode, which is switchable between the normal mode and the pen detection mode.

When the state of the first chassis 31 is the open state, it is assumed that the input device 2 is detached from the first attraction position P1 or the second attraction position P2 and is being used by the user. At this time, the controller 40 sets the operating mode of the electronic apparatus 1 to the normal mode to detect a user's operating position according to output signals of the touch sensor unit 36. The user's operating position indicates a position on the screen of the display 41 at which the input device 2 touches or approaches the screen.

When the state of the first chassis 31 is the closed state, it is assumed that the input device 2 is attached to the first attraction position P1 or the second attraction position P2, that is, the input device 2 is housed on the first chassis 31 or the second chassis 32. At this time, the controller 40 sets the operating mode of the electronic apparatus 1 to the pen detection mode to prevent the input device 2 from being lost, and determines whether or not the input device 2 is housed on the first chassis 31 or the second chassis 32 depending on the output signals of the touch sensor unit 36.

When the input device 2 approaches within the predetermined distance, the controller 40 determines that the input device 2 is housed on the first chassis 31 or the second chassis 32. When the input device 2 does not approach within the predetermined distance, the controller 40 determines that the input device 2 is not housed on the first chassis 31 or the second chassis 32. When determining that the input device 2 is not housed on the first chassis 31 or the second chassis 32, the controller 40 performs control to emit a beeping sound as a warning.

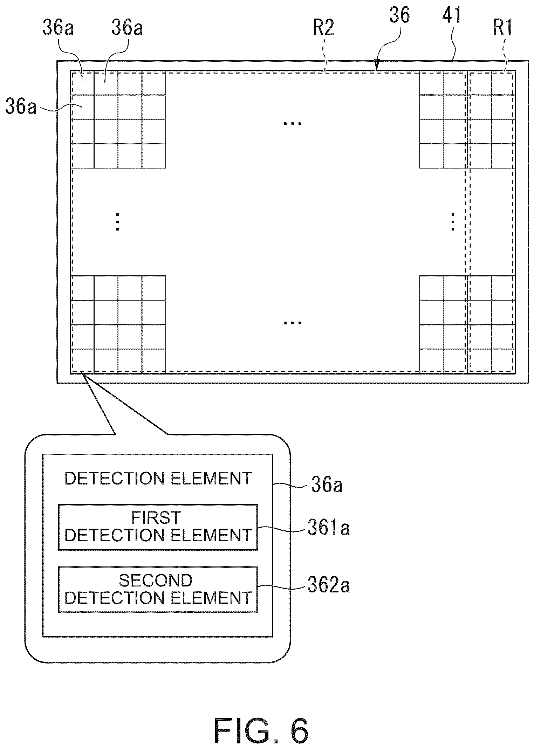

FIG. 6 illustrates an example of the configuration of the touch sensor unit 36. The touch sensor unit 36 is placed in a position overlaid on the display 41. The touch sensor unit 36 includes multiple detection elements 36a arranged in two dimensions. The multiple detection elements 36a are arranged in a first area R1 and a second area R2 adjacent to each other.

Some of the multiple detection elements 36a are arranged in the first area R1. The first area R1 is located in the neighborhood of the first right-side edge 31eA (side face) of the first chassis 31, that is, in the neighborhood of the first attraction position P1. When the state of the first chassis 31 is the closed state, the first area R1 is located in the neighborhood of the second right-side edge 32eA (side face) of the second chassis 32, that is, in the neighborhood of the second attraction position P2. When the input device 2 is attached to the first attraction position P1 or the second attraction position P2, at least some of the detection elements 36a arranged in the first area R1 can detect that the input device 2 approaches within the predetermined distance. As illustrated in FIG. 6, each of the multiple detection elements 36a is a combination of a first detection element 361a of the contact detection unit 361 and a second detection element 362a of the pen detection unit 362.

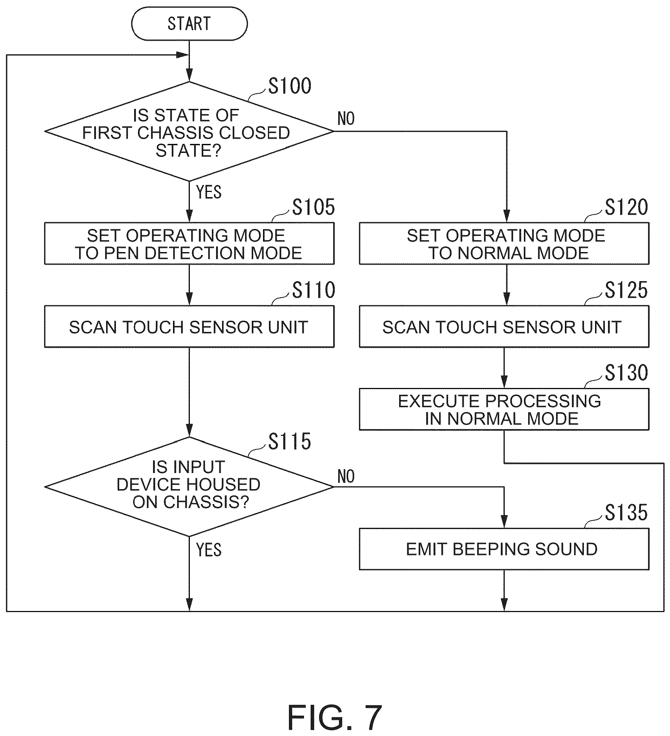

FIG. 7 is a flowchart illustrating an example of the operation of the electronic apparatus 1 related to switching between operating modes. The operation of the electronic apparatus 1 will be described with reference to FIG. 7.

### (Step S100)

The controller 40 can determine the state of the first chassis 31 based, for example, on a signal output from the sensor placed in the first chassis 31 or the second chassis 32. The controller 40 determines whether or not the state of the first chassis 31 relative to the second chassis 32 is the closed state. When the state of the first chassis 31 is the closed state, step S105 is executed. When the state of the first chassis 31 is the open state, step S120 is executed.

### (Step S105)

When it is determined in step S100 that the state of the first chassis 31 is the closed state, the controller 40 sets the operating mode of the electronic apparatus 1 to the pen detection mode.

### (Step S110)

The controller 40 scans the touch sensor unit 36 to acquire signals output from all or some of the multiple detection elements 36a.

### (Step S115)

The controller 40 determines the state of the input device 2 based on the signals acquired in step S110. When the input device 2 is housed on the first chassis 31 or the second chassis 32, step S100 is executed. When the input device 2 is not housed on the first chassis 31 or the second chassis 32, step S135 is executed.

### (Step S135)

When it is determined in step S115 that the input device 2 is not housed on the first chassis 31 or the second chassis 32, the controller 40 emits a beeping sound to prompt the user to check the input device 2. When the electronic apparatus 1 is equipped with a display other than the display 41, the controller 40 may also display a message indicative of a warning or the like on the display. When the electronic apparatus 1 is equipped with an LED lamp or the like, the controller 40 may warn the user by turning on the lamp or making the lamp blinking.

### (Step S120)

When it is determined in step S100 that the state of the first chassis 31 is the open state, the controller 40 sets the operating mode of the electronic apparatus 1 to the normal mode.

### (Step S125)

The controller 40 scans the touch sensor unit 36 to acquire signals output from the multiple detection elements 36a.

### (Step S130)

The controller 40 detects a user's operating position according to the signals acquired in step S125 to execute processing depending on the operating position.

Differences between control in the normal mode and control in the pen detection mode will be described below.

First, a first example related to control in the normal mode and control in the pen detection mode will be described. In the normal mode, the controller 40 scans the first area R1 and the second area R2 of the touch sensor unit 36. The controller 40 acquires signals output from all of the detection elements 36a of the touch sensor unit 36. On the other hand, in the pen detection mode, the controller 40 scans only the first area R1 of the touch sensor unit 36. The controller 40 acquires signals output from detection elements 36a arranged in the first area R1. In the first example, power consumption in the pen detection mode is reduced.

Next, a second example related to control in the normal mode and control in the pen detection mode will be described. In the normal mode, the controller 40 scans the first area R1 and the second area R2 of the touch sensor unit 36 at a first rate. The controller 40 acquires signals output from all of the detection elements 36a of the touch sensor unit 36 at the first rate. On the other hand, in the pen detection mode, the controller 40 scans the first area R1 and the second area R2 of the touch sensor unit 36 at a second rate lower than the first rate. The controller 40 acquires signals output from all of the detection elements 36a of the touch sensor unit 36 at the second rate. In the second example, power consumption in the pen detection mode is reduced.

Next, a third example related to control in the normal mode and control in the pen detection mode will be described. In the normal mode, the controller 40 sets the gain of all of the detection elements 36a of the touch sensor unit 36 to a first value. On the other hand, in the pen detection mode, the controller 40 sets the gain of all of the detection elements 36a of the touch sensor unit 36 to a second value higher than the first value. In both of the normal mode and the pen detection mode, the controller 40 scans the first area R1 and the second area R2 of the touch sensor unit 36, and acquires signals output from all of the detection elements 36a of the touch sensor unit 36. In the third example, the detection sensitivity of the input device 2 in the pen detection mode increases.

Next, a fourth example related to control in the normal mode and control in the pen detection mode will be described. The controller 40 determines whether or not the input device 2 is touching or approaching the screen of the display 41 by comparing a value of each of signals output from the detection elements 36a with a predetermined threshold value (detection threshold value). When one or more values of signals output from the detection elements 36a are the detection threshold value or more, the controller 40 determines that the input device 2 is touching or approaching the screen of the display 41. When values of all signals output from the detection elements 36a are less than the detection threshold value, the controller 40 determines that the input device 2 is not touching or approaching the screen of the display 41. In the normal mode, the controller 40 sets the detection threshold value to a first value. On the other hand, in the pen detection mode, the controller 40 sets the detection threshold value to a second value lower than the first value. In both of the normal mode and the pen detection mode, the controller 40 scans the first area R1 and the second area R2 of the touch sensor unit 36, and acquires signals output from all of the detection elements 36a of the touch sensor unit 36. In the fourth example, the detection sensitivity of the input device 2 in the pen detection mode increases.

Next, a fifth example related to control in the normal mode and control in the pen detection mode will be described. As described above, each of the multiple detection elements 36a is a combination of each of the first detection elements 361a of the contact detection unit 361 and each of the second detection elements 362a of the pen detection unit 362. In the normal mode, the controller 40 scans the first area R1 and the second area R2 of the touch sensor unit 36, and acquires signals output from the first detection elements 361a and signals output from the second detection elements 362a. On the other hand, in the pen detection mode, the controller 40 scans the first area R1 and the second area R2 of the touch sensor unit 36, and acquires signals output from only the second detection elements 362a. In the fifth example, power consumption in the pen detection mode is reduced.

The controller 40 may also execute control by combining two examples among the first to fifth examples mentioned above.

In the present embodiment, the mechanism to attract the input device 2 to one edge (one side face) of the first chassis 31 or the second chassis 32 with the magnets or the like is used, but a holder or the like for storing the input device 2 may be placed on the first chassis 31 or the second chassis 32 instead.

As mentioned above, the electronic apparatus 1 includes the first chassis 31 and the second chassis 32. The first chassis 31 includes the display 41 and the touch sensor unit 36. The touch sensor unit 36 has the multiple detection elements 36a to detect the touch or approach of the input device 2 on or to the display 41. The second chassis 32 has the controller 40. When the state of the first chassis 31 relative to the second chassis 32 is the open state, the controller 40 detects the position where the input device 2 touches or approaches the display 41 based on output signals of the multiple detection elements 36a. When the state of the first chassis 31 relative to the second chassis 32 is the closed state, the controller 40 determines whether or not the input device 2 is housed on the first chassis 31 or the second chassis 32 based on the output signals of the multiple detection elements 36a. When determining that the input device 2 is not housed on the first chassis 31 or the second chassis 32, the controller 40 outputs a warning.

In the present embodiment, the input device 2 can be prevented from being lost. Further, there is no need to provide a new mechanism in the electronic apparatus 1 or the input device 2 to detect the state of the input device 2 relative to the electronic apparatus 1.

As mentioned above, the multiple detection elements 36a are arranged in the first area R1 corresponding to the position where the input device 2 is housed on the first chassis 31 or the second chassis 32, and the second area R2 other than the first area R1. When the state of the first chassis 31 relative to the second chassis 32 is the open state, the controller 40 detects the position where the input device 2 touches or approaches the display 41 based on the output signals of the multiple detection elements 36a arranged in the first area R1 and the second area R2. When the state of the first chassis 31 relative to the second chassis 32 is the closed state, the controller 40 determines whether or not the input device 2 is housed on the first chassis 31 or the second chassis 32 based on output signals of detection elements 36a arranged in the first area R1 among the multiple detection elements 36a. Thus, power consumption required to detect the state of the input device 2 is reduced.

As mentioned above, when the state of the first chassis 31 relative to the second chassis 32 is the open state, the controller 40 acquires the output signals of the multiple detection elements 36a at a first rate. When the state of the first chassis 31 relative to the second chassis 32 is the closed state, the controller 40 acquires the output signals of the multiple detection elements 36a at a second rate lower than the first rate. Thus, power consumption required to detect the state of the input device 2 is reduced.

As mentioned above, when the state of the first chassis 31 relative to the second chassis 32 is the open state, the controller 40 sets the gain of the multiple detection elements 36a to a first value. When the state of the first chassis 31 relative to the second chassis 32 is the closed state, the controller 40 sets the gain of the multiple detection elements 36a to a second value higher than the first value. Thus, sensitivity for detecting the state of the input device 2 increases.

As mentioned above, when the state of the first chassis 31 relative to the second chassis 32 is the open state, the controller 40 sets, to a first value, the detection threshold value compared with the value of each of the output signals of the multiple detection elements 36a in order to determine that the input device 2 is touching or approaching the display 41. When the state of the first chassis 31 relative to the second chassis 32 is the closed state, the controller 40 sets the detection threshold value to a second value lower than the first value. Thus, sensitivity for detecting the state of the input device 2 increases.

As mentioned above, the multiple detection elements 36a contain the multiple first detection elements 361a for detecting the position where the input device 2 touches the display 41, and the multiple second detection elements 362a for detecting the position where the input device 2 approaches the display 41. When the state of the first chassis 31 relative to the second chassis 32 is the open state, the controller 40 acquires output signals of the multiple first detection elements 361a and output signals of the multiple second detection elements 362a. When the state of the first chassis 31 relative to the second chassis 32 is the closed state, the controller 40 acquires the output signals of the multiple second detection elements 362a. Thus, power consumption required to detect the state of the input device 2 is reduced.

While the embodiment of the present invention has been described in detail above with reference to the accompanying drawings, the specific configurations are not limited to those of the aforementioned embodiment, and design changes and the like without departing from the scope of the present invention are included.

### Description of Symbols

- 1: electronic apparatus
- 2: input device
- 10: first magnetic attraction part
- 11: CPU
- 12: main memory
- 13: video subsystem
- 20: second magnetic attraction part
- 21: chipset
- 22: BIOS memory
- 23: SSD
- 24: USB connector
- 25: audio system
- 26: WLAN card
- 30: chassis
- 31: first chassis
- 32: second chassis
- 33: hinge mechanism
- 34: embedded controller
- 35: input unit
- 36: touch sensor unit
- 36a: detection element
- 37: power supply circuit
- 38: sensor unit
- 41: display
- 361: contact detection unit
- 361a: first detection element
- 362a: second detection element
- 362: pen detection unit

## Claims

1. An electronic apparatus comprising
a first chassis and a second chassis, wherein
the first chassis includes:
a display; and
a touch sensor having a plurality of detection elements to detect touch or approach of an input device on or to the display, and
the second chassis includes
a controller which detects a position where the input device touches or approaches the display based on output signals of the plurality of detection elements when a state of the first chassis relative to the second chassis is an open state, or which determines whether or not the input device is housed on the first chassis or the second chassis based on the output signals of the plurality of detection elements when the state of the first chassis relative to the second chassis is a closed state, and outputs a warning when determining that the input device is not housed on the first chassis or the second chassis.

2. The electronic apparatus according to claim 1, wherein
the plurality of detection elements are arranged in a first area corresponding to a position where the input device is housed on the first chassis or the second chassis, and a second area other than the first area, and
when the state of the first chassis relative to the second chassis is the open state, the controller detects the position where the input device touches or approaches the display based on output signals of the plurality of detection elements arranged in the first area and the second area, or
when the state of the first chassis relative to the second chassis is the closed state, the controller determines whether or not the input device is housed on the first chassis or the second chassis based on output signals of detection elements arranged in the first area among the plurality of detection elements.

3. The electronic apparatus according to claim 1 or 2, wherein
when the state of the first chassis relative to the second chassis is the open state, the controller acquires output signals of the plurality of detection elements at a first rate, or
when the state of the first chassis relative to the second chassis is the closed state, the controller acquires the output signals of the plurality of detection elements at a second rate lower than the first rate.

4. The electronic apparatus according to any preceding claim, wherein
when the state of the first chassis relative to the second chassis is the open state, the controller sets a gain of the plurality of detection elements to a first value, or
when the state of the first chassis relative to the second chassis is the closed state, the controller sets the gain to a second value higher than the first value.

5. The electronic apparatus according to any preceding claim, wherein
when the state of the first chassis relative to the second chassis is the open state, the controller sets, to a first value, a detection threshold value, with which a value of each of the output signals of the plurality of detection elements is compared, to determine that the input device is touching or approaching the display, or
when the state of the first chassis relative to the second chassis is the closed state, the controller sets the detection threshold value to a second value lower than the first value.

6. The electronic apparatus according to any preceding claim, wherein
the plurality of detection elements contain:
a plurality of first detection elements for detecting a position where the input device touches the display; and
a plurality of second detection elements for detecting a position where the input device approaches the display, and
when the state of the first chassis relative to the second chassis is the open state, the controller acquires output signals of the plurality of first detection elements and output signals of the plurality of second detection elements, or
when the state of the first chassis relative to the second chassis is the closed state, the controller acquires output signals of the plurality of second detection elements.

7. A control method for an electronic apparatus including a first chassis and a second chassis, wherein
when a state of the first chassis relative to the second chassis is an open state, a position where an input device touches or approaches a display placed on the first chassis is detected based on output signals of a plurality of detection elements equipped in a touch sensor placed on the first chassis, or
when the state of the first chassis relative to the second chassis is a closed state, it is determined whether or not the input device is housed on the first chassis or the second chassis based on the output signals of the plurality of detection elements, and
when it is determined that the input device is not housed on the first chassis or the second chassis, a warning is output.

8. A method performed by an electronic apparatus, the method comprising
detecting, by a touch sensor in a first chassis of the electronic apparatus, touch or approach of an input device on or to a display of the first chassis, the touch sensor having a plurality of detection elements, and
detecting, by a second chassis, a position where the input device touches or approaches the display when a state of the first chassis relative to the second chassis is an open state, or which determines whether or not the input device is housed on the first chassis or the second chassis based on the output signals of the plurality of detection elements when the state of the first chassis relative to the second chassis is a closed state, and outputting a warning when determining that the input device is not housed on the first chassis or the second chassis.

9. The method according to claim 8, wherein
the plurality of detection elements are arranged in a first area corresponding to a position where the input device is housed on the first chassis or the second chassis, and a second area other than the first area, and
when the state of the first chassis relative to the second chassis is the open state, the method further comprises detecting the position where the input device touches or approaches the display based on output signals of the plurality of detection elements arranged in the first area and the second area, or
when the state of the first chassis relative to the second chassis is the closed state, the method further comprises determining whether or not the input device is housed on the first chassis or the second chassis based on output signals of detection elements arranged in the first area among the plurality of detection elements.

10. The method according to claim 8 or 9, wherein
when the state of the first chassis relative to the second chassis is the open state, the method further comprises acquiring output signals of the plurality of detection elements at a first rate, or
when the state of the first chassis relative to the second chassis is the closed state, the method further comprises acquiring the output signals of the plurality of detection elements at a second rate lower than the first rate.

11. The method according to any of claims 8 to 10, wherein
when the state of the first chassis relative to the second chassis is the open state, the method further comprises setting a gain of the plurality of detection elements to a first value, or
when the state of the first chassis relative to the second chassis is the closed state, the method further comprises setting the gain to a second value higher than the first value.

12. The method according to any of claims 8 to 11, wherein
when the state of the first chassis relative to the second chassis is the open state, the method further comprises setting, to a first value, a detection threshold value, with which a value of each of the output signals of the plurality of detection elements is compared, to determine that the input device is touching or approaching the display, or
when the state of the first chassis relative to the second chassis is the closed state, the method further comprises setting the detection threshold value to a second value lower than the first value.

13. The method according to any of claims 8 to 12, wherein
the plurality of detection elements contain:
a plurality of first detection elements for detecting a position where the input device touches the display; and
a plurality of second detection elements for detecting a position where the input device approaches the display, and
when the state of the first chassis relative to the second chassis is the open state, the method further comprises acquiring output signals of the plurality of first detection elements and output signals of the plurality of second detection elements, or
when the state of the first chassis relative to the second chassis is the closed state, the method further comprises acquiring output signals of the plurality of second detection elements.
